# EUROPEAN PATENT APPLICATION

(11) **EP 4 535 479 A1**
(43) Date of publication of application: **09.04.2025**
(21) Application number: 24775102.7
(22) Date of filing: 07.03.2024
(51) Int. Cl.: H01M 10/04, H01M 50/54, B23K 20/10, B23K 20/26, H01M 10/052

(54) **APPARATUS FOR MANUFACTURING SECONDARY BATTERY AND METHOD FOR MANUFACTURING SECONDARY BATTERY BY USING SAME**

(30) Priority: 17.03.2023 KR 20230035289; 07.08.2023 KR 20230102669
(71) Applicant: LG Energy Solution, Ltd., Seoul 07335 (KR)
(72) Inventor: PARK, Hoan Young, Daejeon 34122 (KR)
(74) Representative: Goddar, Heinz J.
(86) International application number: PCT/KR2024/002959
(87) International publication number: WO 2024/196054

(57) **Abstract**

A secondary battery manufacturing apparatus includes: (1) a support plate configured to support an electrode assembly with a plurality of tabs; (2) a pressing device configured to pressurize the electrode assembly to fix the electrode assembly;(3) a horn configured to weld the plurality of tabs, and (4) an anvil configured to support the plurality of tabs welded by the horn. The pressing device and/or the support plate include a hole for discharging air. A secondary battery manufacturing method comprises:
(1) fixing an electrode assembly that includes a plurality of tabs; (2) discharging air to the plurality of tabs; (3) aligning the plurality of tabs; and (4)welding the plurality of tabs. The electrode assembly is fixed by a support plate configured to support the electrode assembly and a pressing device configured to press the electrode assembly. Air is discharged by the support plate or the pressing device.

## Description

### CROSS-REFERENCE TO RELATED APPLICATIONS

The present application is a national phase entry under 35 U.S.C. § 371 of International Application No. PCT/KR2024/002959, which was filed on March 7, 2024 and claims priority from Korean Patent Application No. 10-2023-0035289, filed on March 17, 2023, and Korean Patent Application No. 10-2023-0102669, filed on August 7, 2023, all of which are incorporated herein by reference.

### TECHNICAL FIELD

The present disclosure relates to a secondary battery manufacturing apparatus and a method of manufacturing a secondary battery using the same.

**BACKGROUND** A secondary battery can be charged and discharged a plurality of times unlike a primary battery. Secondary batteries have been widely used as energy sources for various types of wireless devices such as handsets, laptop computers, and cordless vacuum cleaners. Recently, owing to improved energy density and economies of scale, manufacturing costs of electric-powered hybrid electric vehicles (HEVs) and battery electric vehicles (BEVs) have dramatically decreased and a range of BEVs has increased to the same level as that of fuel vehicles, and thus, a main use of secondary batteries is moving from mobile devices to mobility.

A battery cell is a most basic unit of a secondary battery and thus an improvement of mechanical and electrical performance of the battery cell is a most effective and key factor in improving the performance of the secondary battery.

### SUMMARY [Technical Problem]

The present disclosure is directed to providing an apparatus for manufacturing a secondary battery with improved productivity and a method of manufacturing a secondary battery using the same.

### [Technical Solution]

Aspects of the present disclosure provide a secondary battery manufacturing apparatus. The secondary battery manufacturing apparatus includes a support plate configured to support an electrode assembly with a plurality of tabs, a pressing device configured to pressurize the electrode assembly to fix the electrode assembly, a horn configured to weld the plurality of tabs, and an anvil configured to support the plurality of tabs welded by the horn, in which the pressing device includes a hole for discharging air.

The pressing device may be configured to discharge the air to the plurality of tabs.

The pressing device may include a bottom surface in contact with the electrode assembly, a top surface opposite to the bottom surface, and a front surface interposed between the top surface and the bottom surface and facing the horn and the anvil, and the hole in the pressing device may extend from the top surface to the front surface.

The hole may include an outlet in the front surface and an inlet in the top surface.

A shape of the inlet may be different from a shape of the outlet.

The secondary battery manufacturing apparatus may further include an air supply device configured to supply the air to the pressing device, and an air supply line connecting the air supply device and the hole in the pressing device,

A shape of a cross section of the air supply line may be the same as a shape of the inlet.

Aspects of the present disclosure provide a secondary battery manufacturing apparatus. The secondary battery manufacturing apparatus includes a support plate configured to support an electrode assembly with a plurality of tabs, and a horn configured to weld the plurality of tabs, in which the support plate includes a hole for discharging air to the plurality of tabs.

The support plate may include a top surface in contact with the electrode assembly, a bottom surface opposite to the top surface, and a front surface interposed between the top surface and the bottom surface and facing the horn, and the hole in the pressing device may extend from the bottom surface to the front surface.

The hole may include an outlet in the front surface and an inlet in the bottom surface.

The secondary battery manufacturing apparatus may further include an air supply device configured to supply the air to the support plate, and an air supply line connecting the air supply device and the hole in the support plate,

A shape of a cross section of the air supply line is the same as a shape of the inlet.

Example aspects of the present disclosure provide a secondary battery manufacturing method including fixing an electrode assembly which includes a plurality of tabs, discharging air to the plurality of tabs, aligning the plurality of tabs, and welding the plurality of tabs.

According to example aspects, the electrode assembly may be fixed by a support plate configured to support the electrode assembly and a pressing device configured to press the electrode assembly, and the air may be discharged by the support plate or the pressing device.

### [Advantageous Effects]

According to example aspects of the present disclosure , a plurality of tabs of an electrode assembly may be prevented from being folded by discharging air to the plurality of tabs before welding of the plurality of tabs. Accordingly, the reliability of welding can be improved, and the performance of a secondary battery manufactured by the welding can be improved.

Effects achievable from example aspects of the present disclosure are not limited to the above-described effects, and other effects that are not described herein will be clearly derived and understood by those of ordinary skilled in the art to which the example aspects of the present disclosure pertain from the following description. That is, unintended effects achieved when the example aspects of the present disclosure are implemented are derivable by those of ordinary skilled in the art from the example aspects of the present disclosure .

### DESCRIPTION OF THE DRAWINGS

FIG. 1 is a diagram for describing a secondary battery manufacturing apparatus according to example aspects.
FIG. 2 is a view of a bottom surface of a support plate of FIG. 1.
FIG. 3 is a view of a front surface of the support plate of FIG. 1.
FIG. 4 is a cross-sectional view taken along line AA-AA' of FIG. 3.
FIG. 5 is a view of a top surface of a pressing device of FIG. 1.
FIG. 6 is a view of a front surface of the pressing device of FIG. 1.
FIG. 7 is a cross-sectional view taken along line BB-BB' of FIG. 6.
FIG. 8 is a flowchart of a method of manufacturing a secondary battery according to example aspects.
FIG. 9 is a view of a bottom surface of a support plate according to other example aspects.
FIG. 10 is a view of a front surface of the support plate according to other example aspects.
FIG. 11 is a cross-sectional view taken along line CC-CC' of FIG. 10.
FIG. 12 is a view of a bottom surface of a pressing device according to other example aspects.
FIG. 13 is a view of a front surface of a pressing device according to other example aspects.
FIG. 14 is a cross-sectional view taken along line DD-DD' of FIG. 13.

### DETAILED DESCRIPTION

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Aspect)

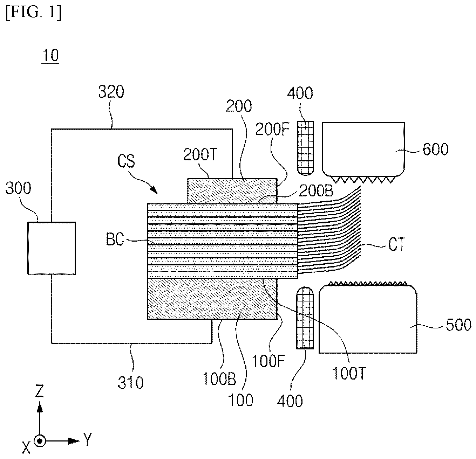

FIG. 1 is a diagram for describing a secondary battery manufacturing apparatus 10 according to example aspects.

Referring to FIG. 1, the secondary battery manufacturing apparatus 10 may include a support plate 100, a pressing device 200, an air supply device 300, a guide device 400, an anvil 500, and a horn 600.

An electrode assembly EA may include a plurality of electrodes. Each of the plurality of electrodes may be a positive electrode or a negative electrode. Accordingly, each of the plurality of electrodes of the electrode assembly EA may include a positive electrode tab or a negative electrode tab. Accordingly, the electrode assembly EA may include a plurality of tabs ET.

According to example aspects, the secondary battery manufacturing apparatus 10 may be configured to weld the tabs ET. According to example aspects, the secondary battery manufacturing apparatus 10 may weld the tabs ET using ultrasonic waves. Incomplete welding of the tabs ET may cause a decrease in the capacity of the electrode assembly EA and thus welding of the tabs ET is one of key processes that determine the performance of the electrode assembly EA.

According to example aspects, welding performed by the secondary battery manufacturing apparatus 10 may be pre-welding. Recently, the number of electrodes to be welded has increased significantly due to an increase in energy density of secondary batteries and thus dozens of tabs ET are simultaneously welded. To reliably weld a large number of tabs ET, welding of the plurality of tabs ET may include two steps: pre-welding and main welding. As a non-limiting example, the pre-welding may be ultrasonic welding as described above, and the main welding may be laser welding.

After pre-welding the plurality of tabs ET, the plurality of tabs ET may be welded together with an electrode lead. The electrode lead may be an external connection terminal of a battery cell. Here, the battery cell is a basic unit of a lithium ion battery, i.e., a secondary battery. The battery cell includes an electrolyte and a case, in addition to the electrode assembly EA. Battery cells are classified into a lithium ion battery, a lithium ion polymer battery, a lithium polymer battery, etc. according to a configuration of the electrode assembly EA and the electrolyte. A market share of lithium ion polymer batteries in the field of secondary battery is increasing due to a low possibility of leakage of an electrolyte and easiness in manufacturing.

Battery cells are classified into cylindrical batteries in which the electrode assembly EA is built in a cylindrical metal can, prismatic batteries in which the electrode assembly EA is built in a prismatic metal can, and pouch-type batteries in which the electrode assembly EA is built in a pouch case of aluminum laminate sheet, according to a shape of a battery case.

The electrode assembly EA included in the battery case includes a positive electrode, a negative electrode, and a separator interposed between the positive electrode and the negative electrode. The electrode assembly EA may be classified as a j elly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

The positive electrodes may each include a positive electrode current collector and a positive electrode active material. The negative electrodes may each include a negative electrode current collector and a negative electrode active material.

A thickness of the positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of the negative electrode current collector may be in a range of about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

The positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, Cu, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i₀.₄Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

For example, the negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The support plate 100 may be configured to support the electrode assembly EA. The electrode assembly EA may be on a top surface 100T of the support plate 100. The top surface 100T of the support plate 100 may be in contact with the electrode assembly EA. The support plate 100 may further include a bottom surface 100B opposite to the top surface 100T, and a front surface 100F that is interposed between the top surface 100T and the bottom surface 100B and faces the anvil 500 and the horn 600.

Hereinafter, two directions substantially parallel to the top surface 100T of the support plate 100 will be defined as an X-axis direction and a Y-axis direction, and a direction substantially perpendicular to the top surface 100T of the support plate 100 will be defined as a Z-axis direction. The X-axis direction, the Y-axis direction, and the Z-axis direction may be substantially perpendicular to one another. Unless otherwise defined, the above-described directions apply to all drawings.

The pressing device 200 may be configured to fix the electrode assembly EA. A bottom surface 200B of the pressing device 200 may be in contact with the electrode assembly EA. The pressing device 200 may further include a top surface 200T opposite to the bottom surface 200B, and a front surface 200F that is interposed between the bottom surface 200B and the top surface 200T and faces the anvil 500 and the horn 600.

The pressing device 200 may be configured to apply pressing to the electrode assembly EA. The pressing device 200 may be configured to fix the electrode assembly EA by applying pressing to the electrode assembly EA together with the support plate 100. The electrode assembly EA may be fixed by pressing applied by the support plate 100 and the pressing device 200 and frictional force caused by the pressing.

Each of the support plate 100 and the pressing device 200 may be configured to discharge air to the plurality of tabs ET of the electrode assembly EA. The plurality of tabs ET may be prevented from being folded and the reliability of welding the tabs ET may be improved by discharging air by the support plate 100 and the pressing device 200.

The air supply device 300 may be configured to supply air to the support plate 100 and the pressing device 200. The air supply device 300 may be configured to control a composition, speed, flow rate, and temperature, humidity and pressure of air to be discharged through the support plate 100 and the pressing device 200.

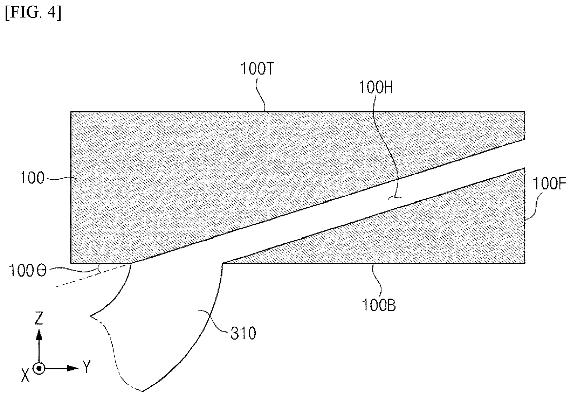

The air supply device 300 may be configured to adjust at least one of a speed, flow rate, and pressure of air to be discharged through each of a plurality of holes 100H (see FIG. 4) of the support plate 100. Thus, the speed, flow rate and pressure of air discharged from each of the plurality of holes 100H (see FIG. 4) of the support plate 100 may be different from those of air discharged through the other holes 100H.

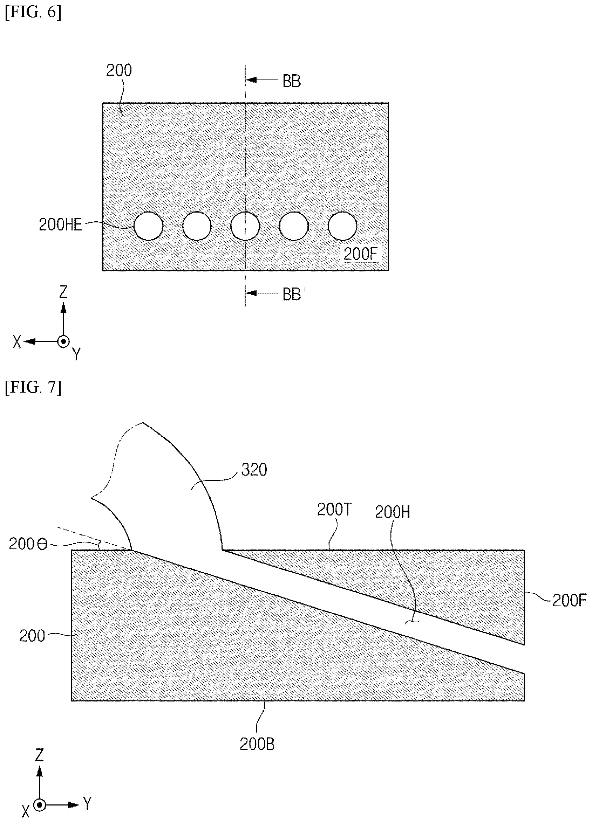

The air supply device 300 may be configured to adjust at least one of a speed, flow rate, and pressure of air to be discharged through each of a plurality of holes 200H (see FIG. 7) of the pressing device 200. Thus, the speed, flow rate and pressure of air discharged from each of the plurality of holes 200H (see FIG. 7) of the pressing device 200 may be different from those of air discharged from the other holes 200H.

The air supply device 300 may include a controller configured to control the discharging of air through the support plate 100 and the pressing device 200. The controller may be configured to control the discharging of air through the support plate 100 and the pressing device 200 according to a preset process recipe. The controller may be configured to control the discharge of air through the support plate 100 and the pressing device 200 based on the state of the plurality of tabs ET of the electrode assembly EA (e.g., the vision inspection result of the plurality of tabs ET).

The controller may be a computing device such as a workstation computer, a desktop computer, a laptop computer, or a tablet computer. The controller may be configured as a separate hardware component or may be separate software included in each hardware component. The controller may be a simple controller, a microprocessor, a complex processor such as a CPU or a GPU, a processor configured by software, dedicated hardware, or firmware. The controller may be implemented, for example, by a general-purpose computer or application-specific hardware such as a digital signal process (DSP), a field-programmable gate array (FPGA) or an application-specific integrated circuit (ASIC).

According to some aspects, an operation of the controller may be implemented by instructions stored in a machine-readable medium that is readable and executable by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), magnetic disk storage media, optical storage media, flash memory devices, electrical, optical, acoustic, or other types of radio signals (e.g., carrier waves, infrared signals, digital signals, etc.), and other signals.

Firmware, software, routines, and instructions may be configured to perform the operation described above with respect to the controller or a process to be described below. However, the above description is provided only for convenience of description, and it should be understood that the above-described operation of the controller may be performed by a computing device, a processor, a controller, or other devices for executing firmware, software, routines, instructions, etc.

First air supply lines 310 may connect the air supply device 300 and the support plate 100. The first air supply lines 310 may be connected to each of the air supply device 300 and the support plate 100, and provide a passage for transferring air between the air supply device 300 and the support plate 100.

Second air supply lines 320 may connect the air supply device 300 and the pressing device 200. The second air supply lines 320 may be connected to each of the air supply device 300 and the pressing device 200, and provide a passage for transferring air between the air supply device 300 and the pressing device 200.

The guide device 400 may be configured to align the plurality of tabs ET. The guide device 400 may collect the plurality of tabs ET. The reliability of welding the plurality of tabs ET may be improved by the operation of the guide device 400.

The anvil 500 may be configured to support the plurality of tabs ET during welding of the plurality of tabs ET by the secondary battery manufacturing apparatus 10. According to example aspects, the anvil 500 may be a supporting jig. The anvil 500 may be configured to fix positions of the plurality of tabs ET to efficiently transfer energy to the plurality of tabs ET by the horn 600. The anvil 500 may include one of a knurled shape and a rib shape to fix the plurality of tabs ET.

The horn 600 may be configured to provide ultrasonic energy to the plurality of tabs ET. A wavelength of ultrasonic waves provided to the plurality of tabs ET by the horn 600 may be in a range of about 18000 Hz to about 1 GHz. The horn 600 may include a converter that converts AC power or DC power into mechanical vibration, and a booster that amplifies the mechanical vibration. The ultrasonic energy may generate frictional heat on the plurality of tabs ET and thus the plurality of tabs ET may be welded.

The horn 600 may be an ultrasonic resonator and include a structure repeated at intervals of a spatial period that is half or equal to an ultrasonic wavelength or is equal to an integer multiple of the ultrasonic wavelength. A repeated unit structure of the horn 600 may include a knurled shape or a rib shape. As a non-limiting example, the horn 600 may include an aluminum alloy, a titanium alloy, and die steel.

### (Second Aspect)

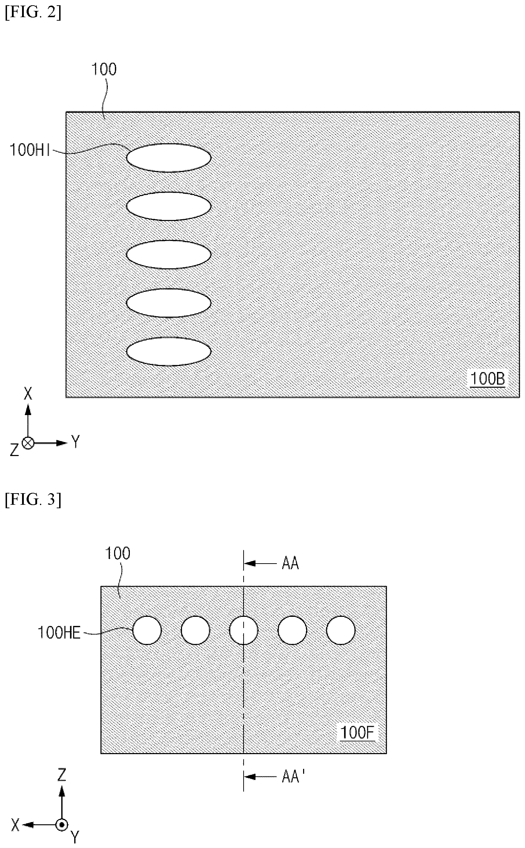

FIG. 2 is a view of the bottom surface 100B of the support plate 100 of FIG. 1.

FIG. 3 is a view of the front surface 100F of the support plate 100 of FIG. 1.

FIG. 4 is a cross-sectional view taken along line AA-AA' of FIG. 3.

Referring to FIG. 1, FIG. 2, FIG. 3, and FIG. 4, the support plate 100 may include a plurality of holes 100H. The plurality of holes 100H may extend from the bottom surface 100B toward the front surface 100F. The plurality of holes 100H may extend obliquely to the bottom surface 100B and the top surface 100T of the support plate 100. According to example aspects, an angle of 100θ between a direction in which the plurality of holes 100H extend and the bottom surface 100B may be in a range from about 5° to about 85°.

Inlets 100HI of the plurality of holes 100H may be in the bottom surface 100B of the support plate 100.

Outlets 100HE of the plurality of holes 100H may be in the front surface 100F of the support plate 100. As a non-limiting example, the distance between each of the outlets 100HE and the top surface 100T may be less than the distance between each of the outlets 100HE and the bottom surface 100B. According to example aspects, the outlets 100HE may be aligned in the X-axis direction. Accordingly, the outlets 100HE may be at the same level from the bottom surface 100B in the Z-axis direction.

Shapes of each of the inlets 100HI and each of the outlets 100HE of the plurality of holes 100H may be different from each other. For example, each of the outlets 100HE may have a circular shape and each of the inlets 100HI may have an elliptical shape.

According to example aspects, shapes of each of the inlets 100HI and each of the outlets 100HE of the plurality of holes 100H may be the same. In this case, the angle of 100θ between the direction in which the plurality of holes 100H extend and the bottom surface 100B may be about 45°.

According to example aspects, a length of each of the inlets 100HI in the X-axis direction may be substantially the same as a length of each of the outlets 100HE in the X-axis direction. In the present example, it is illustrated that a length of each of the inlets 100HI in the Y-axis direction is greater than the length of each of the inlets 100HI in the X-axis direction but the length of each of the inlets 100HI in the X-axis direction may be greater than the length of each of the inlets 100HI in the Y-axis direction.

According to example aspects, the plurality of holes 100H may be formed by processing methods such as mechanical drilling and laser drilling to form the outlets 100HE in various shapes such as a circular shape, a polygonal shape, an elliptical shape, a cross shape, and a star shape. The shape of each of the inlets 100HI may be determined by the shape of a corresponding one of the outlets 100HE and the angle of 100θ of the plurality of holes 100H.

According to example aspects, pressure of air discharged through the outlets 100HE may be increased by increasing the shapes of the outlets 100HE compared to those of the inlets 100HI.

According to example aspects, the first air supply lines 310 may be connected to the inlets 100HI. According to example aspects, cross-sectional shapes of the first air supply lines 310 may be substantially the same as the shapes of the inlets 100HI. Accordingly, turbulence that may be caused by a change in a cross-sectional area according to a path of air may be prevented.

### (Third Aspect)

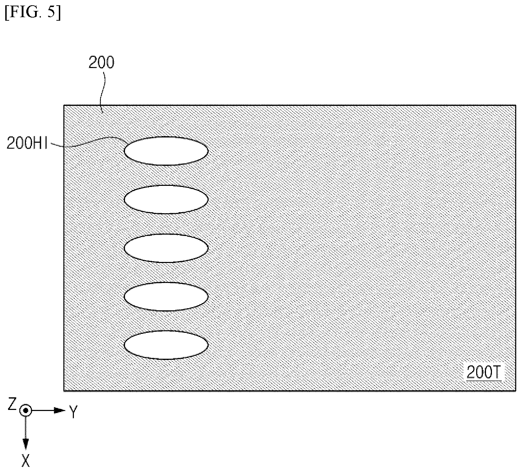

FIG. 5 is a view of the top surface 200T of the pressing device 200 of FIG. 1.

FIG. 6 is a view of the front surface 200F of the pressing device 200 of FIG. 1.

FIG. 7 is a cross-sectional view taken along line BB-BB' of FIG. 6.

Referring to FIG. 1, FIG. 5, FIG. 6, and FIG. 7, the pressing device 200 may include a plurality of holes 200H. The plurality of holes 200H may extend from the top surface 200T to the front surface 200F. The plurality of holes 200H may extend obliquely to the top surface 200T and the bottom surface 200B of the pressing device 200. According to example aspects, an angle of 200θ between a direction in which the plurality of holes 200H extend and the top surface 200T may be in a range from about 5° to about 85°.

Inlets 200HI of the plurality of holes 200H may be in the top surface 200T of the pressing device 200.

Outlets 200HE of the plurality of holes 200H may be in the front surface 200F of the pressing device 200. As a non-limiting example, the distance between the outlets 200HE and the bottom surface 200B may be less than the distance between the outlets 200HE and the top surface 200T. According to example aspects, the outlets 200HE may be aligned in the X-axis direction and thus may be at the same level from the bottom surface 200B in the Z-axis direction.

Shapes of each of the inlets 200HI and each of the outlets 200HE of the plurality of holes 200H may be different from each other. For example, each of the outlets 200HE may have a circular shape, and each of the inlets 200HI may have an elliptical shape.

According to example aspects, each of the inlets 200HI and each of the outlets 200HE of the plurality of holes 200H may have the same shape. **In** this case, an angle of 200θ between the direction in which the plurality of holes 200H extend and the top surface 200T may be about 45°.

According to example aspects, a length of each of the inlets 200HI in the X-axis direction may be substantially the same as a length of each of the outlets 200HE in the X-axis direction. **In** the present example, it is illustrated that a length of each of the inlets 200HI in the Y-axis direction is greater than the length of each of the inlets 200HI in the X-axis direction but the length of each of the inlets 200HI in the X-axis direction may be greater than the length of each of the inlets 200HI in the Y-axis direction.

According to example aspects, the plurality of holes 200H may be formed by processing methods such as mechanical drilling and laser drilling to form the outlets 200HE in various shapes such as a circular shape, a polygonal shape, an elliptical shape, a cross shape, and a star shape. The shape of the inlets 200HI may be determined by the shapes of the outlets 200HE and the angle of 200θ of the plurality of holes 200H.

According to example aspects, pressure of air discharged through the outlets 200HE may be increased by increasing the shapes of the outlets 200HE compared to those of the inlets 200HI.

According to example aspects, the second air supply lines 320 may be connected to the inlets 200HI. According to example aspects, cross-sectional shapes of the second air supply lines 320 may be substantially the same as the shapes of the inlets 200HI. Accordingly, turbulence that may be caused by a change in a cross-sectional area according to a path of air may be prevented.

### (Fourth Aspect)

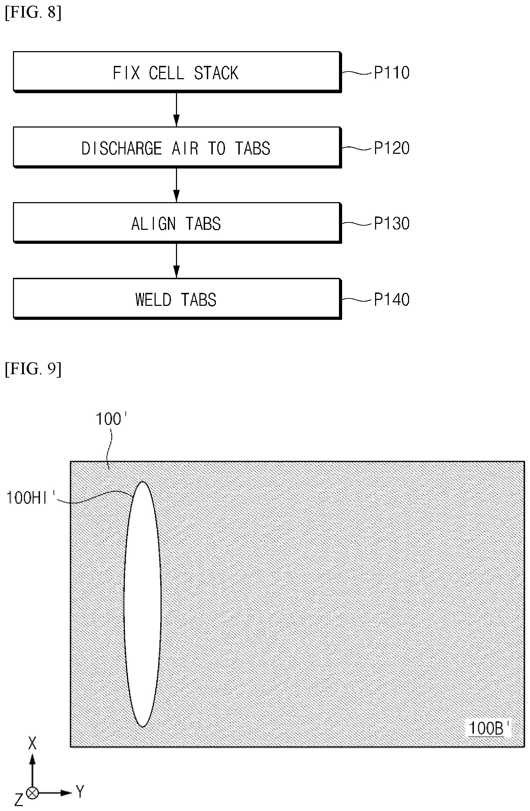

FIG. 8 is a flowchart of a method of manufacturing a secondary battery according to example aspects.

Referring to FIG. 1 and FIG. 8, in P110, the electrode assembly EA may be fixed. After loading the electrode assembly EA onto the support plate 100, the electrode assembly EA may be fixed by pressing the electrode assembly EA by the pressing device 200.

Next, in P120, air may be discharged to the plurality of tabs ET of the electrode assembly EA. The discharge of the air may be performed by at least one of the support plate 100 and the pressing device 200.

Next, in P130, the plurality of tabs ET may be aligned. The plurality of tabs ET may be aligned by the guide device 400.

Next, in P140, the plurality of tabs ET may be welded. The plurality of tabs ETs may be welded by fixing the plurality of tabs ET with an anvil and applying ultrasonic energy to the plurality of tabs ETs using a horn.

### (Fifth Aspect)

FIG. 9 is a view of a bottom surface 100B' of a support plate 100' according to other example aspects.

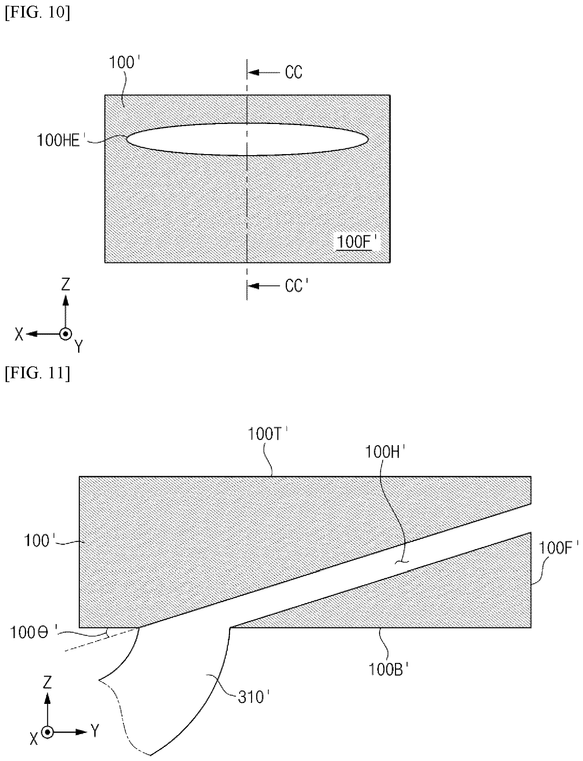

FIG. 10 is a view of a front surface 100F' of the support plate 100' according to other example aspects.

FIG. 11 is a cross-sectional view taken along line CC-CC' of FIG. 10.

Referring to FIG. 9, FIG. 10, and FIG. 11, the support plate 100' may replace the support plate 100 of FIG. 1. According to example aspects, the support plate 100' may include only a single hole 100H'. The hole 100H' may extend from the bottom surface 100B' of the support plate 100' to the front surface 100F' of the support plate 100'. The hole 100H' may extend obliquely to each of the bottom surface 100B' of the support plate 100' and the top surface 100T' of the support plate 100'. According to example aspects, an angle of 100θ' between a direction in which the hole 100H' extends and the bottom surface 100B' may be in a range from about 5° to about 85°.

An inlet 100HI' of the hole 100H' may be in the bottom surface 100B' of the support plate 100'. An outlet 100HE' of the hole 100H' may be in a front surface 100F' of the support plate 100'. As a non-limiting example, the distance between the outlet 100HE' and the top surface 100T' may be less than the distance between the outlet 100HE' and the bottom surface 100B'.

The inlet 100HI' and the outlet 100HE' of the hole 100H' may be in the form of slit. A length of the inlet 100HI' of the hole 100H' in the X-axis direction may be greater than a length of the inlet 100HI' of the hole 100H' in the Y-axis direction. A length of the outlet 100HE' of the hole 100H' in the X-axis direction may be greater than a length of the outlet 100HE' of the hole 100H' in the Y-axis direction.

According to example aspects, the hole 100H' may be formed by processing methods such as mechanical drilling and laser drilling. A shape of the inlet 100HI' may be determined by a shape of the outlet 100HE' and the angle of 100θ' of the hole 100H'.

According to example aspects, a first air supply lines 310' may be connected to the inlet 100HI'. According to example aspects, a cross-sectional shape of the first air supply lines 310' may be substantially the same as the shape of the inlet 100HI'. Accordingly, turbulence that may be caused by a change in a cross-sectional area according to a path of air may be prevented.

### (Sixth Aspect)

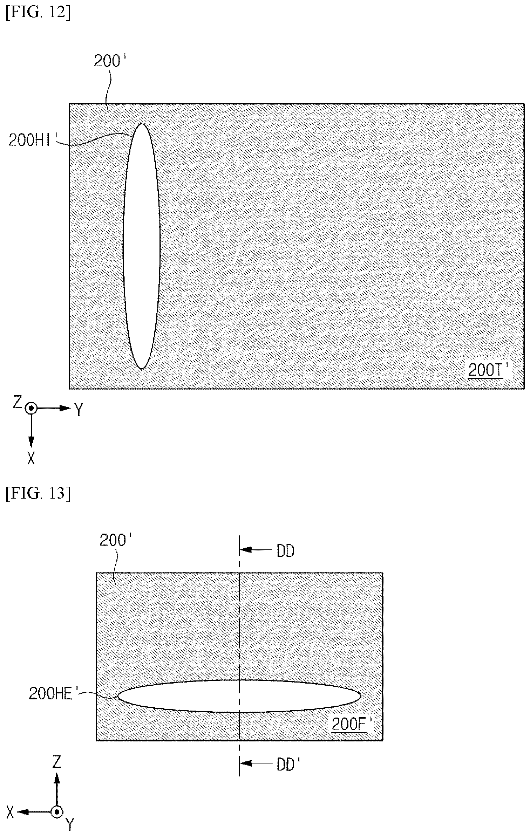

FIG. 12 is a view of a top surface 200T' of a pressing device 200' according to other example aspects.

FIG. 13 is a view of a front surface 200F' of the pressing device 200' according to other example aspects.

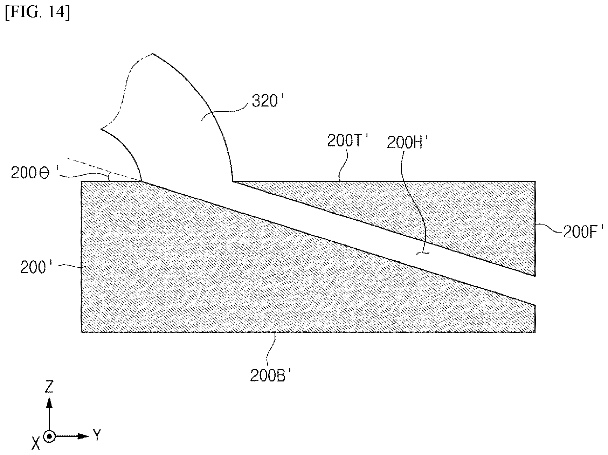

FIG. 14 is a cross-sectional view taken along line DD-DD' of FIG. 13.

Referring to FIG. 12, FIG. 13, and FIG. 14, the pressing device 200' may replace the pressing device 200 of FIG. 1. According to example aspects, the pressing device 200' may include a single hole 200H'. The hole 200H' may extend from the top surface 200T' of the pressing device 200' to the front surface 200F' of the pressing device 200'. The hole 200H' may extend obliquely to each of a bottom surface 200B' and the top surface 200T' of the pressing device 200'. According to example aspects, an angle of 200θ' between a direction in which the hole 200H' extends and the top surface 200T' may be in a range from about 5° to about 85°.

An inlet 200HI' of the hole 200H' may be in the top surface 200T' of the pressing device 200'. An outlet 200HE' of the hole 200H' may be in the front surface 200F' of the pressing device 200'. As a non-limiting example, the distance between the outlet 200HE' and the top surface 200T' may be greater than the distance between the outlet 200HE' and the bottom surface 200B'.

The inlet 200HI' and the outlet 200HE' of the hole 200H' may be in the form of slit. A length of the inlet 200HI' of the hole 200H' in the X-axis direction may be greater than a length of the inlet 200HI' of the hole 200H' in the Y-axis direction. A length of the outlet 200HE' of the hole 200H' in the X-axis direction may be greater than a length of the outlet 200HE' of the hole 200H' in the Y-axis direction.

According to example aspects, the hole 200H' may be formed by processing methods such as mechanical drilling and laser drilling. A shape of the inlet 200HI' may be determined by a shape of the outlet 200HE' and the angle of 200θ' of the hole 200H'.

According to example aspects, a second air supply lines 320' may be connected to inlets 200HI'. According to example aspects, a cross-sectional shape of the second air supply lines 320' may be substantially the same as the shape of the inlet 200HI'. Accordingly, turbulence that may be caused by a change in a cross-sectional area according to a path of air may be prevented.

The present invention has been described above in more detail with reference to the drawings, the aspects, etc. However, the configurations illustrated in the drawings or aspects described in the present specification are only aspects of the present invention and do not reflect all the technical ideas of the present invention and thus it should be understood that various equivalents and modifications that replace the configurations would have been made at the filing date of the present application.

## Claims

1. A secondary battery manufacturing apparatus comprising:
a support plate configured to support an electrode assembly with a plurality of tabs;
a pressing device configured to pressurize the electrode assembly to fix the electrode assembly;
a horn configured to weld the plurality of tabs; and
an anvil configured to support the plurality of tabs welded by the horn,
wherein the pressing device includes a hole configured to discharge air.

2. The secondary battery manufacturing apparatus of claim 1, wherein the pressing
device is configured to discharge the air to the plurality of tabs.

3. The secondary battery manufacturing apparatus of claim 1, wherein the pressing
device comprises:
a bottom surface in contact with the electrode assembly;
a top surface opposite to the bottom surface; and
a front surface interposed between the top surface and the bottom surface and facing the horn and the anvil,
wherein the hole in the pressing device extends from the top surface to the front surface.

4. The secondary battery manufacturing apparatus of claim 3, wherein the hole in the
pressing device includes an outlet in the front surface and an inlet in the top surface.

5. The secondary battery manufacturing apparatus of claim 4, wherein a shape of the inlet is different from a shape of the outlet.

6. The secondary battery manufacturing apparatus of claim 4, further comprising:
an air supply device configured to supply air to the pressing device; and
an air supply line connecting the air supply device and the hole in the pressing device,
wherein a shape of a cross section of the air supply line is the same as a shape of the inlet in the top surface.

7. A secondary battery manufacturing apparatus comprising:
a support plate configured to support an electrode assembly with a plurality of tabs; and
a horn configured to weld the plurality of tabs,
wherein the support plate includes a hole configured to discharge air to the plurality of tabs.

8. The secondary battery manufacturing apparatus of claim 7, wherein the support plate comprises:
a top surface in contact with the electrode assembly;
a bottom surface opposite to the top surface; and
a front surface interposed between the top surface and the bottom surface and facing the horn,
wherein the hole in the support plate extends from the bottom surface to the front surface.

9. The secondary battery manufacturing apparatus of claim 8, wherein the hole in the support plate includes an outlet in the front surface and an inlet in the bottom surface.

10. The secondary battery manufacturing apparatus of claim 9, further comprising:
an air supply device configured to supply air to the support plate; and
an air supply line configured to connect the air supply device and the hole in the support plate,
wherein a shape of a cross section of the air supply line is the same as a shape of the inlet in the bottom surface.

11. A secondary battery manufacturing method comprising:
fixing an electrode assembly that includes a plurality of tabs;
discharging air to the plurality of tabs;
aligning the plurality of tabs; and
welding the plurality of tabs.

12. The secondary battery manufacturing method of claim 11, wherein the electrode assembly is fixed by a support plate configured to support the electrode assembly and a pressing device configured to press the electrode assembly, and wherein
the air is discharged by the support plate or the pressing device.
